# EUROPEAN PATENT SPECIFICATION

(11) **EP 3 483 967 B1**
(45) Date of publication and mention of the grant of the patent: **17.06.2020**
(21) Application number: 18209766.7
(22) Date of filing: 22.03.2016
(51) Int. Cl.: H01M 8/0202, C25D 5/26, C25D 5/36, C25D 7/00, H01M 8/10, H01M 8/0208, C25D 5/12, C23C 28/02, H01M 8/021, H01M 8/0228, H01M 8/1018, C25D 3/12, C25D 3/38, C25D 5/48, C23C 18/16, C23C 28/00, C25D 3/46, C25D 3/62, C25D 5/38, C25D 15/00, C25D 3/56

(54) **METAL SHEET FOR SEPARATORS OF POLYMER ELECTROLYTE FUEL CELLS**
METALLBLECH FÜR SEPARATOREN AUS POLYMERELEKTROLYT-BRENNSTOFFZELLEN
FEUILLE MÉTALLIQUE POUR SÉPARATEURS DE PILES À COMBUSTIBLE À ÉLECTROLYTE POLYMÈRE

(30) Priority: 14.04.2015 JP 2015082736
(43) Date of publication of application: 15.05.2019
(62) Divisional of application: 16779734.9
(73) Proprietor: JFE Steel Corporation, Tokyo 100-0011 (JP)
(72) Inventor: Yano, Takayoshi, Tokyo, 100-0011 (JP); Ishikawa, Shin, Tokyo, 100-0011 (JP); Kami, Chikara, Tokyo, 100-0011 (JP)
(74) Representative: Hoffmann Eitle

(56) References cited:
- EP-A1- 1 492 186
- EP-A1- 2 759 622
- JP-A- S61 223 197
- JP-A- S62 103 390
- JP-A- 2006 312 762
- JP-A- 2009 064 589
- US-A1- 2006 110 648
- US-A1- 2010 143 825

## Description

### TECHNICAL FIELD

The disclosure relates to a metal sheet for separators of polymer electrolyte fuel cells having excellent corrosion resistance and adhesion property.

### BACKGROUND

In recent years, fuel cells that have excellent generation efficiency and emit no CO₂ are being developed for global environment protection. Such a fuel cell generates electricity from H₂ and O₂ through an electrochemical reaction. The fuel cell has a sandwich-like basic structure, and includes an electrolyte membrane (ion-exchange membrane), two electrodes (fuel electrode and air electrode), gas diffusion layers of O₂ (air) and H₂, and two separators.

Fuel cells are classified as phosphoric acid fuel cells, molten carbonate fuel cells, solid oxide fuel cells, alkaline fuel cells, and polymer electrolyte fuel cells (PEFC: proton-exchange membrane fuel cells or polymer electrolyte fuel cells) according to the type of electrolyte membrane used, which are each being developed.

Of these fuel cells, polymer electrolyte fuel cells have, for example, the following advantages over other fuel cells.
(a) The fuel cell operating temperature is about 80 °C, so that electricity can be generated at significantly low temperature.
(b) The fuel cell body can be reduced in weight and size.
(c) The fuel cell can be started promptly, and has high fuel efficiency and power density.

Polymer electrolyte fuel cells are therefore expected to be used as power sources in electric vehicles, home or industrial stationary generators, and portable small generators.

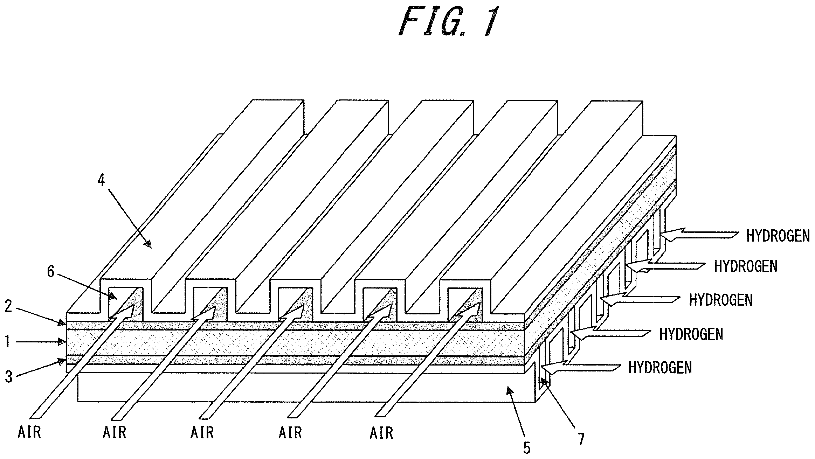

A polymer electrolyte fuel cell extracts electricity from H₂ and O₂ via a polymer membrane. As illustrated in FIG. 1, a membrane-electrode joined body 1 is sandwiched between gas diffusion layers 2 and 3 (for example, carbon paper) and separators (bipolar plates) 4 and 5, forming a single component (a single cell). An electromotive force is generated between the separators 4 and 5.

The membrane-electrode joined body 1 is called a membrane-electrode assembly (MEA). The membrane-electrode joined body 1 is an assembly of a polymer membrane and an electrode material such as carbon black carrying a platinum catalyst on the front and back surfaces of the membrane, and has a thickness of several 10 µm to several 100 µm. The gas diffusion layers 2 and 3 are often integrated with the membrane-electrode joined body 1.

In the case of actually using polymer electrolyte fuel cells, several tens to hundreds of single cells such as the above are typically connected in series to form a fuel cell stack and put to use.

The separators 4 and 5 are required to function not only as
(a) partition walls separating single cells,
   but also as
(b) conductors carrying generated electrons,
(c) air passages 6 through which O₂ (air) flows and hydrogen passages 7 through which H₂ flows, and
(d) exhaust passages through which generated water or gas is exhausted (the air passages 6 or the hydrogen passages 7 also serve as the exhaust passages).

The separators therefore need to have excellent durability and electric conductivity.

Regarding durability, about 5000 hours are expected in the case of using the polymer electrolyte fuel cell as a power source in an electric vehicle, and about 40000 hours are expected in the case of using the polymer electrolyte fuel cell as a home stationary generator or the like. Since the proton conductivity of the polymer membrane (electrolyte membrane) decreases if metal ions leach due to corrosion, the separators need to be durable for long-term generation.

Regarding electric conductivity, the contact resistance between the separator and the gas diffusion layer is desirably as low as possible, because an increase in contact resistance between the separator and the gas diffusion layer causes lower generation efficiency of the polymer electrolyte fuel cell. A lower contact resistance between the separator and the gas diffusion layer contributes to better power generation property.

Polymer electrolyte fuel cells using graphite as separators have already been commercialized. The separators made of graphite are advantageous in that the contact resistance is relatively low and also corrosion does not occur. The separators made of graphite, however, easily break on impact, and so are disadvantageous in that the size reduction is difficult and the processing cost for forming gas flow passages is high. These drawbacks of the separators made of graphite hinder the widespread use of polymer electrolyte fuel cells.

Attempts have been made to use a metal material as the separator material instead of graphite. In particular, various studies have been conducted to commercialize separators made of stainless steel, titanium, a titanium alloy, or the like for enhanced durability.

For example, JP H8-180883 A (PTL 1) discloses a technique of using, as separators, a metal such as stainless steel or a titanium alloy that easily forms a passive film.

JP H10-228914 A (PTL 2) discloses a technique of plating the surface of a metal separator such as an austenitic stainless steel sheet (SUS304) with gold to reduce the contact resistance and ensure high output.

### CITATION LIST

### Patent Literatures

PTL 1: JP H8-180883 A
PTL 2: JP H10-228914 A
PTL 3: JP 2012-178324 A
PTL 4: JP 2013-118096 A

### SUMMARY

### (Technical Problem)

With the technique disclosed in PTL 1, however, the formation of the passive film causes an increase in contact resistance, and leads to lower generation efficiency. The metal material disclosed in PTL 1 thus has problems such as high contact resistance and low corrosion resistance as compared with the graphite material.

With the technique disclosed in PTL 2, a thin gold plating is hard to be kept from the formation of pinholes, and a thick gold plating is problematic in terms of an increase in cost.

In view of this, we previously proposed in JP 2012-178324 A (PTL 3) "a metal sheet for separators of polymer electrolyte fuel cells wherein a layer made of a Sn alloy (hereafter also referred to as "Sn alloy layer") is formed on the surface of a substrate made of metal and the Sn alloy layer includes conductive particles". Through the development of the metal sheet for separators of polymer electrolyte fuel cells described in PTL 3, we succeeded in improving the corrosion resistance in the use environment of separators of polymer electrolyte fuel cells.

However, the surface-coating layer such as the Sn alloy layer (hereafter also referred to as "surface-coating layer") formed on the surface of the metal material for separators of polymer electrolyte fuel cells is required not only to have predetermined corrosion resistance, but also to be thinner in terms of reducing surface coating cost and improving manufacturability (reduction in surface-coating layer formation time).

We accordingly proposed in JP 2013-118096 A (PTL 4) a surface coating method for separators of fuel cells wherein the surface of a substrate made of high Cr stainless steel is subjected to anodic electrolysis that induces a Cr transpassive dissolution reaction and then immediately subjected to Ni₃Sn₂ layer formation, without the formation of an intermediate layer. We thus succeeded in obtaining separators of polymer electrolyte fuel cells having excellent corrosion resistance even in the case where the surface-coating layer made of the Sn alloy layer such as the Ni₃Sn₂ layer is made thinner.

In the fuel cell manufacturing process, high adhesion between the substrate and the surface-coating layer is necessary so that the surface-coating layer does not peel off the substrate. With the technique described in PTL 4, however, the adhesion property is not always sufficient, for example, in the process of forming the separator into a desired shape, in the process of assembling the fuel cell, or when the fuel cell vibrates violently during use, and there is a possibility that the surface-coating layer peels.

Thus, while the surface-coating layer formed on the surface of the substrate in the case of using a metal material such as stainless steel as the material of separators of polymer electrolyte fuel cells needs to have both corrosion resistance and adhesion property as well as being thinner, such need has not been fulfilled adequately.

It could therefore be helpful to provide a metal sheet for separators of polymer electrolyte fuel cells having both excellent corrosion resistance in the use environment of separators of polymer electrolyte fuel cells and excellent adhesion property between a substrate and a surface-coating layer even in the case where the surface-coating layer is made thinner.

### (Solution to Problem)

We used various metal sheets as the material of separators of polymer electrolyte fuel cells, and studied various surface-coating layer formation processes for these metal sheets.

As a result, we made the following discoveries.
(1) First, to improve the adhesion property, we attempted to form a strike layer made of a metal layer of Ni, Cu, or the like as a pre-treatment layer on the surface of a substrate made of metal, prior to the formation of a surface-coating layer. We then discovered that forming the strike layer as the pre-treatment layer on the surface of the metal substrate significantly improves the adhesion property of the surface-coating layer.
(2) Next, we attempted to form a thinner surface-coating layer after forming the strike layer, and discovered the following. When the surface-coating layer is made thinner, defects from the surface-coating layer to the metal substrate increase, and the strike layer is continuously corroded through these defects. This causes the surface-coating layer above the strike layer to exfoliate, exposing the metal substrate to the separator use environment. As a result, the corrosion resistance degrades significantly.
(3) We carried out further research to prevent the degradation of the corrosion resistance in the case of making the surface-coating layer thinner.

As a result, we discovered that, by limiting the coating weight of the strike layer to the range of 0.001 g/m² to 1.0 g/m² which is lower than in conventional techniques, the continuous corrosion of the strike layer is suppressed, so that the degradation of the corrosion resistance associated with the exfoliation of the surface-coating layer is effectively prevented without degradation in adhesion property.

The reason why limiting the coating weight of the strike layer to the range of 0.001 g/m² to 1.0 g/m² suppresses the continuous corrosion of the strike layer appears to be as follows.

By limiting the coating weight of the strike layer to a range lower than in conventional techniques, a discontinuous portion such as a non-plating area of the strike layer appears on the surface of the metal substrate, and this discontinuous portion of the strike layer acts as an area that inhibits the propagation of the corrosion. Hence, the continuous corrosion of the strike layer can be suppressed even in the case where the surface-coating layer is made thinner.
(4) We also discovered that, while the strike layer may be a metal layer of Ni, Cu, Ag, Au, or the like or an alloy layer containing at least one selected from these elements, a Ni-P strike layer made of an alloy layer of Ni and P is particularly suitable as the strike layer for its low material cost and excellent corrosion resistance. We further discovered that, by limiting the P content in the Ni-P strike layer to the range of 5 mass% to 22 mass%, excellent corrosion resistance can be maintained more stably even in the event of long exposure to high potential in the separator use environment.
   The reason for this appears to be as follows. By limiting the P content in the Ni-P strike layer to the range of 5 mass% to 22 mass%, a more stable Ni-P compound in the separator use environment is formed, with it being possible to further suppress the corrosion of the strike layer.
(5) We additionally discovered that, in the case where the surface-coating layer is a Sn alloy layer, coating the surface of the layer with a Sn-containing oxide layer further improves the corrosion resistance.

The reason for this appears to be as follows. Since the Sn-containing oxide layer is very stable in the separator use environment, coating the surface of the Sn alloy layer with the Sn-containing oxide layer suppresses the corrosion of the Sn alloy layer effectively. The corrosion resistance can be further improved by such an effect.

The disclosure is based on the aforementioned discoveries.

We thus provide:
A metal sheet for separators of polymer electrolyte fuel cells, comprising: a substrate made of a stainless steel sheet or a titanium sheet; and a surface-coating layer with which a surface of the substrate is coated, with a strike layer in between, wherein a coating weight of the strike layer is 0.001 g/m² to 1.0 g/m²., the surface-coating layer is made of a metal oxide layer, a metal carbide layer, a conductive polymer layer, or a mixed layer thereof.

The metal sheet for separators of polymer electrolyte fuel cells as defined above, wherein the strike layer can contain at least one element selected from the group consisting of Ni, Cu, Ag, and Au.

The metal sheet for separators of polymer electrolyte fuel cells as defined above, wherein the strike layer can be made of an alloy layer of Ni and P, and has a P content in a range of 5 mass% to 22 mass%.

### (Advantageous Effect)

It is possible to obtain a separator of a fuel cell having excellent corrosion resistance and adhesion property, and thus obtain a polymer electrolyte fuel cell having excellent durability at low cost.

### BRIEF DESCRIPTION OF THE DRAWINGS

In the accompanying drawings:
FIG. 1 is a schematic diagram illustrating the basic structure of a fuel cell.

### DETAILED DESCRIPTION

Detailed description is given below.

### (1) Metal sheet used as substrate

A metal sheet used as a substrate in the disclosure is not particularly limited, but a stainless steel sheet (ferritic stainless steel sheet, austenitic stainless steel sheet, dual-phase stainless steel sheet), a titanium sheet, a titanium alloy sheet, and the like having excellent corrosion resistance are particularly advantageous.

For example, as the stainless steel sheet, SUS447J1 (Cr: 30 mass%, Mo: 2 mass%), SUS445J1 (Cr: 22 mass%, Mo: 1 mass%), SUS443J1 (Cr: 21 mass%), SUS439 (Cr: 18 mass%), SUS316L (Cr: 18 mass%, Ni: 12 mass%, Mo: 2 mass%), or the like is suitable. SUS447J1 containing about 30 mass% Cr has high corrosion resistance, and so is particularly advantageous as the substrate for separators of polymer electrolyte fuel cells used in an environment where high corrosion resistance is required. As the titanium sheet, JIS 1 type or the like is suitable. As the titanium alloy sheet, JIS 61 type or the like is suitable.

In view of the installation space or weight when stacking fuel cells, the sheet thickness of the metal sheet for separators is preferably in the range of 0.03 mm to 0.3 mm. If the sheet thickness of the metal sheet for separators is less than 0.03 mm, the production efficiency of the metal sheet decreases. If the sheet thickness of the metal sheet for separators is more than 0.3 mm, the installation space or weight when stacking fuel cells increases. The sheet thickness of the metal sheet for separators is more preferably 0.03 mm or more and 0.1 mm or less.

### (2) Surface-coating layer

A surface-coating layer with which the surface of the substrate is coated is not limited, but a material excellent in corrosion resistance and conductivity in the use environment (pH: 3 (sulfuric acid environment), use temperature: 80 °C) of separators of polymer electrolyte fuel cells is peferably used. Therefore, a metal oxide layer, a metal carbide layer, a conductive polymer layer, or a mixed layer thereof is used.

Examples of the metal oxide layer include metal oxide layers of SnO₂, ZrO₂, TiO₂, WO₃, SiO₂, Al₂O₃, Nb₂O₅, IrO₂, RuO₂, PdO₂, Ta₂O₅, Mo₂O₅, and Cr₂O₃. A metal oxide layer of TiO₂ or SnO₂ is particularly suitable.

Examples of the metal carbide layer include metal carbide layers of TiC, WC, SiC, B₄C, CrC, and TaC.

Examples of the conductive polymer layer include conductive polymer layers of polyaniline and polypyrrole.

For the formation of the surface-coating layer on the surface of the metal substrate, a method such as plating, physical vapor deposition (PVD), chemical vapor deposition (CVD), electrodeposition, thermal spraying, surface melting treatment, or coating may be used depending on the type of the surface-coating layer to be formed.

For example, in the case of providing the surface-coating layer that is the metal layer or the alloy layer, plating is suitable. In this case, by a conventionally known plating method the substrate is immersed in a plating bath adjusted to a predetermined composition and subjected to electroplating, electroless plating, or hot dip coating. The thickness of such a surface-coating layer is preferably 0.1 µm or more and 5 µm or less. If the thickness of the surface-coating layer is less than 0.1 µm, coating defects increase and the corrosion resistance tends to degrade. If the thickness of the surface-coating layer is more than 5 µm, the coating cost increases and manufacturability decreases. The thickness of the surface-coating layer is more preferably 0.5 µm or more. The thickness of the surface-coating layer is more preferably 3 µm or less.

In the case of providing the metal oxide layer or the metal carbide layer, physical vapor deposition (PVD) or chemical vapor deposition (CVD) is suitable. The thickness of such a surface-coating layer is preferably in the range of 0.05 µm to 1 µm, for the same reason as above.

In the case of providing the conductive polymer layer, electropolymerization is suitable. The thickness of such a surface-coating layer is preferably in the range of 0.1 µm to 5 µm, for the same reason as above.

### (Strike layer)

In the disclosure, a strike layer is formed between the metal substrate and the surface-coating layer to improve the adhesion between the layer and the substrate. The reason why forming the strike layer between the metal substrate and the surface-coating layer improves the adhesion between the surface-coating layer and the substrate appears to be as follows.

In the case where there is no strike layer, an inactive passive film or the like tends to be formed on the surface of the metal substrate, making it difficult to achieve high adhesion. In the case where the strike layer is provided, on the other hand, the formation of the passive film or the like is suppressed and the surface of the metal substrate is kept from becoming inactive, as a result of which the adhesion between the substrate and the surface-coating layer is improved.

Moreover, a strike layer whose surface is uneven is more advantageous because the adhesion is further improved by the anchor effect.

The disclosed metal sheet for separators of polymer electrolyte fuel cells thus has excellent adhesion between the substrate and the surface-coating layer, and therefore is advantageous in the process of forming the separator into a desired shape or the process of assembling the fuel cell where high adhesion is required, or when the fuel cell vibrates violently during use.

In the disclosure, it is very important to limit the coating weight of the strike layer to the following range:
the coating weight of the strike layer: 0.001 g/m² to 1.0 g/m².

By limiting the coating weight of the strike layer to this range, the corrosion resistance in the separator use environment can be maintained even in the case where the surface-coating layer is made thinner. The reason for this appears to be as follows.

Typically, when the thickness of the surface-coating layer is reduced, in-layer defects from the surface-coating layer to the substrate increase. Through these defects, the strike layer between the metal substrate and the surface-coating layer is widely corroded continuously in the surface direction, causing the surface-coating layer above the strike layer to exfoliate from the metal substrate. When the surface-coating layer exfoliates, the substrate is exposed to the separator use environment, and as a result the corrosion resistance decreases.

Limiting the coating weight of the strike layer to a very low range, however, allows the strike layer to be formed discontinuously on the surface of the substrate. In other words, a discontinuous portion such as a non-plating area of the strike layer appears in part of the surface of the substrate. This discontinuous portion of the strike layer acts as an area that inhibits the propagation of the corrosion. Hence, the continuous corrosion of the strike layer is suppressed even in the case where the surface-coating layer is made thinner. The degradation of the corrosion resistance can be prevented in this way.

If the coating weight of the strike layer is less than 0.001 g/m², the adhesion between the metal substrate and the surface-coating layer decreases. If the coating weight of the strike layer is more than 1.0 g/m², the corrosion resistance cannot be maintained in the case where the thickness of the surface-coating layer is reduced. Accordingly, the coating weight of the strike layer is limited to the range of 0.001 g/m² to 1.0 g/m². The coating weight of the strike layer is preferably 0.003 g/m² or more. The coating weight of the strike layer is preferably 0.5 g/m² or less. The coating weight of the strike layer is more preferably 0.003 g/m² or more. The coating weight of the strike layer is more preferably 0.3 g/m² or less. The coating weight of the strike layer is further preferably 0.005 g/m² or more. The coating weight of the strike layer is further preferably 0.05 g/m² or less.

The strike layer is preferably a metal layer of Ni, Cu, Ag, Au, or the like or an alloy layer containing at least one selected from these elements. A Ni strike or a Ni-P strike made of an alloy layer of Ni and P is more preferable in terms of material cost.

In the case of a Ni-P strike, it is further preferable to limit the P content in the Ni-P strike layer to the range of 5 mass% to 22 mass%.

### P content in Ni-P strike layer: 5 mass% to 22 mass%

By limiting the P content in the Ni-P strike layer to this range, excellent corrosion resistance can be maintained more stably even in the event of long exposure to high potential in the separator environment. The reason for this appears to be as follows.

By limiting the P content in the Ni-P strike layer to the range of 5 mass% to 22 mass%, a more stable Ni-P compound in the separator use environment is formed, with it being possible to suppress the corrosion of the strike layer effectively for a longer time.

If the P content in the Ni-P strike layer is less than 5 mass%, the acid resistance improvement effect of the Ni-P compound is insufficient. Such a range is not preferable in terms of maintaining excellent corrosion resistance in the event of long exposure to high potential in the separator environment which is acid. If the P content in the Ni-P strike layer is more than 22 mass%, the composition of the Ni-P strike tends to be not uniform. Such a range is also not preferable in terms of maintaining excellent corrosion resistance in the event of long exposure to high potential in the separator environment. Therefore, the P content in the Ni-P strike layer is preferably limited to the range of 5 mass% to 22 mass%. The P content in the Ni-P strike layer is more preferably 7 mass% or more. The P content in the Ni-P strike layer is more preferably 20 mass% or less. The P content in the Ni-P strike layer is further preferably 10 mass% or more. The P content in the Ni-P strike layer is further preferably 18 mass% or less.

The method of forming the strike layer may be a conventionally known plating method whereby electroplating or electroless plating is performed in a plating bath adjusted to an appropriate composition. The coating weight of the strike layer is adjustable by the time of retention in the plating bath, i.e. the plating time.

The P content in the Ni-P strike layer is adjustable by the P concentration in the plating bath, the current density in electroplating, or the like.

### (4) Sn-containing oxide layer

In the disclosed metal sheet for separators, in the case where the surface-coating layer is a layer made of a Sn alloy (Sn alloy layer), the surface of the Sn alloy layer is preferably coated with a Sn-containing oxide layer. This further improves the corrosion resistance after long use in the separator use environment.

The Sn-containing oxide layer with which the surface of the Sn alloy layer is coated is not a natural oxide layer created in the atmospheric environment but an oxide layer deliberately formed by a process such as immersion in an acid solution. The thickness of the natural oxide layer is typically about 2 nm to 3 nm.

The main component of the Sn-containing oxide layer is preferably SnO₂. The thickness of the Sn-containing oxide layer is preferably 5 nm or more. The thickness of the Sn-containing oxide layer is preferably 100 nm or less. The thickness of the Sn-containing oxide layer is more preferably 10 nm or more. The thickness of the Sn-containing oxide layer is more preferably 30 nm or less. If the Sn-containing oxide layer is excessively thick, the conductivity decreases. If the Sn-containing oxide layer is excessively thin, the corrosion resistance improvement effect in the separator use environment cannot be achieved.

The reason why coating the surface of the Sn alloy layer with the Sn-containing oxide layer improves the corrosion resistance after long use in the separator use environment appears to be as follows. Since the Sn-containing oxide layer is very stable in the separator use environment, coating the surface of the surface-coating layer with the Sn-containing oxide layer suppresses the corrosion of the surface-coating layer effectively.

Here, the oxide layer is deliberately formed by a process such as immersion in an acid solution instead of using a natural oxide layer, for the following reason. Through such a process, the oxide layer can be uniformly and accurately formed on the surface of the surface-coating layer, with it being possible to suppress the corrosion of the surface-coating layer very effectively.

The Sn-containing oxide layer may be formed by a method of immersion in an acid aqueous solution having oxidizability such as hydrogen peroxide or nitric acid, or a method of anodic electrolysis.

For example, the Sn-containing oxide layer can be formed by applying anodic electrolysis, in a sulfuric acid aqueous solution of a temperature of 60 °C and a pH of 1 for 5 minutes with a current density of +1 mA/cm², to the metal sheet for separators having the surface-coating layer.

The method of forming the Sn-containing oxide layer is not limited to the above. Other examples include physical vapor deposition (PVD), chemical vapor deposition (CVD), and coating.

### (5) Other features

After forming the surface-coating layer on the surface of the metal substrate with the strike layer in between or after forming the Sn alloy layer on the surface of the metal substrate with the strike layer in between and then forming the Sn-containing oxide layer, a conductive layer with lower electric resistance may be further formed on the surface-coating layer or the Sn-containing oxide layer, to improve the conductivity which is one of the required properties of separators. For example, the surface-coating layer or the Sn-containing oxide layer may be coated with a metal layer, a conductive polymer layer, an alloy layer including conductive particles, or a polymer layer including conductive particles, in order to reduce the contact resistance.

### EXAMPLES

Separators of polymer electrolyte fuel cells are used in a severe corrosion environment of about 80 °C in temperature and 3 in pH, and therefore excellent corrosion resistance is required. Moreover, high adhesion between the metal substrate and the surface-coating layer is required so that the surface-coating layer does not peel off the metal substrate in the fuel cell manufacturing process such as the process of forming the separator into a desired shape or the process of assembling the fuel cell. In view of these required properties, the following two types of evaluation were conducted on the below-mentioned samples.

### (1) Evaluation of corrosion resistance (stability in separator use environment)

Each sample was immersed in a sulfuric acid aqueous solution of a temperature of 80 °C and a pH of 3 and applied at a constant potential of 0.9 V (vs. SHE) for 20 hours using Ag/AgCl (saturated KCl aqueous solution) as a reference electrode, and the current density after 20 hours was measured. Based on the current density after 20 hours, the corrosion resistance after 20 hours in the separator use environment was evaluated by the following criteria.
- Pass (excellent): the current density after 20 hours was less than 0.015 µA/cm²
- Pass: the current density after 20 hours was 0.015 µA/cm² or more and less than 0.2 µA/cm².
- Fail: the current density after 20 hours was 0.2 µA/cm² or more.

### (2) Evaluation of adhesion property

The adhesive face of Scotch tape was adhered to the surface of each sample obtained by forming a surface-coating layer on the surface of a metal substrate, in an area of 20 mm × 20 mm. The Scotch tape was then removed, and the adhesion property was evaluated by the following criteria.
- Pass: the surface-coating layer did not peel after the removal of the Scotch tape.
- Fail: the surface-coating layer peeled after the removal of the Scotch tape.

### (Example 1)

Each of SUS447J1 (Cr: 30 mass%) of 0.05 mm in sheet thickness and titanium JIS 1 type of 0.05 mm in sheet thickness as a substrate was subjected to appropriate pretreatment such as degreasing, and then a strike layer with a coating weight in Table 1 was formed on the substrate using the following plating bath composition and plating condition. Next, a surface-coating layer with an average thickness in Table 1 was formed on the substrate having the strike layer, to obtain a metal sheet for separators.

For the metal layer and alloy layer of Au and Ni₃Sn₂ and TiN-dispersed Ni₃Sn₂, the surface-coating layer was formed using the following plating bath composition and plating condition. For the metal oxide layers of TiO₂ and SnO₂, the surface-coating layer was formed by physical vapor deposition (PVD). For the metal nitride layer (TiN), the surface-coating layer was formed by physical vapor deposition (PVD). For the carbon material layer (diamond-like carbon), the surface-coating layer was formed by chemical vapor deposition (CVD). For the conductive polymer layer (polyaniline), the surface-coating layer was formed by electropolymerization. For the organic resin layer containing a conductive substance (carbon black-dispersed epoxy resin and graphite-dispersed phenol resin), the surface-coating layer was formed by applying a predetermined coating solution and then firing.

In sample No. 29, the obtained metal sheet for separators was subjected to anodic electrolysis in a sulfuric acid aqueous solution of a temperature of 60 °C and a pH of 1 for 5 minutes with a current density of +1 mA/cm², to form a Sn-containing oxide layer on the surface of the surface-coating layer.

Each property was evaluated in the aforementioned manner using the obtained metal sheet for separators.

The coating weight of the strike layer, the average thickness of the surface-coating layer, and the average thickness of the Sn-containing oxide layer were each regulated by determining the relationship with the plating time, the anodic electrolysis time, the layer formation time in physical vapor deposition (PVD) or chemical vapor deposition (CVD), and the amount of the coating solution applied in the coating beforehand. For comparison, a metal sheet for separators having no strike layer was also prepared, and each property was evaluated in the aforementioned manner.

The coating weight of the strike layer was measured by the following method. First, each sample obtained by forming the strike layer on the surface of the substrate (0.05 mm in thickness) was cut to about 50 mm W × 50 mm L, the lengths of two sides were measured by a caliper square, and the sample area was calculated. The sample was then immersed in a solution in which the strike layer can be dissolved (a known dissociation solution may be used, such as 30% nitric acid for Ni, Ni-P, or Cu strike, 90% sulfuric acid + 10% nitric acid for Ag strike, and 30 g/L sodium cyanide + 40 mL/L hydrogen peroxide for Au strike) for 10 minutes to dissolve the strike layer. The constituent element of the strike layer dissolved in the solution was quantified using an inductively coupled plasma (ICP) emission spectrometric analyzer, and the sample area was divided by the quantification result, thus yielding the coating weight (g/m²). Regarding the samples having no strike, "-" is set in the field of the coating weight of the strike layer in Table 1.

The average thickness of the surface-coating layer was measured by the following method. The measurement method in the case where the average thickness is 1 µm or more is described first. Each sample obtained by forming the strike layer and the surface-coating layer on the surface of the substrate (0.05 mm in thickness) was cut to about 10 mm W × 15 mm L. The sample was then embedded in resin, polished in the cross section, and then observed using a scanning electron microscope (SEM) to measure the thickness of the surface-coating layer. The measurement of the thickness of the surface-coating layer was performed on 10 samples obtained by cutting the same sample having the surface-coating layer to the aforementioned shape, and the average thickness of these samples was set as the average thickness of the surface-coating layer.

The measurement method in the case where the average thickness of the surface-coating layer is less than 1 µm and the method of measuring the average thickness of the Sn-containing oxide layer are described next. Each sample obtained by forming the strike layer and the surface-coating layer and, for No. 29, further the Sn-containing oxide layer on the surface of the substrate (0.05 mm in thickness) was processed by a focused ion beam to prepare a thin film for cross-section observation. The produced thin film for cross-section observation was then observed using a transmission electron microscope (TEM), to measure the average thickness of each of the surface-coating layer and the Sn-containing oxide layer. In the measurement of the average thickness of each of the surface-coating layer and the Sn-containing oxide layer, the thickness of each of the surface-coating layer and the Sn-containing oxide layer in the prepared thin film for cross-section observation was measured at three locations, and the average value of the three locations was set as the average thickness of the corresponding one of the surface-coating layer and the Sn-containing oxide layer.

Here, the composition of each of the surface-coating layer and the Sn-containing oxide layer was identified by an energy-dispersive X-ray spectrometer (EDX), X-ray diffractometer (XRD), laser Raman spectrometer, and/or Fourier transform infrared spectroscopic analyzer used in the SEM observation or TEM observation.

### (Plating bath composition and plating condition of strike layer)

### <Ni strike>

Nickel chloride: 240 g/L
Hydrochloric acid: 125 ml/L
Temperature: 50 °C
Current density: 5 A/dm²

### <Ni-P strike>

Nickel sulfate: 1 mol/L
Nickel chloride: 0.1 mol/L
Boric acid: 0.5 mol/L
Sodium phosphite: 0.05 mol/L to 5 mol/L
Temperature: 50 °C
Current density: 5 A/dm²

### <Cu strike>

Copper cyanide: 30 g/L
Sodium cyanide: 40 g/L
Potassium hydroxide: 4 g/L
Temperature: 40 °C
Current density: 5 A/dm²

### <Ag strike>

Silver potassium cyanide: 2 g/L
Sodium cyanide: 120 g/L
Temperature: 30 °C
Current density: 3 A/dm²

### < Au strike >

Gold potassium cyanide: 8 g/L
Sodium citrate: 80 g/L
Nickel sulfamate: 3 g/L
Zinc acetate: 0.3 g/L
Temperature: 30 °C
Current density: 3 A/dm²

### (Plating bath composition and plating condition of surface-coating layer)

### <Au>, comparative example

Gold potassium cyanide: 8 g/L
Sodium citrate: 80 g/L
Nickel sulfamate: 3 g/L
Zinc acetate: 0.3 g/L
Temperature: 30 °C
Current density: 1 A/dm²

### <Ni₃Sn₂>, comparative example

Nickel chloride: 0.15 mol/L
Tin chloride: 0.15 mol/L
Potassium pyrophosphate: 0.45 mol/L
Glycine: 0.15 mol/L
Temperature: 60 °C
Current density: 1 A/dm²

### <TiN-dispersed Ni₃Sn₂>, comparative example

Nickel chloride: 0.15 mol/L
Tin chloride: 0.15 mol/L
Potassium pyrophosphate: 0.45 mol/L
Glycine: 0.15 mol/L
Temperature: 60 °C
Current density: 1 A/dm²
Average particle size of dispersed TiN: 1.5 µm

In the disclosure, as long as a desired plating can be formed, a plating bath composition other than the above may be used according to a known plating method.

Table 1 summarizes the results of evaluating the corrosion resistance (stability in the separator use environment) and the adhesion property for each sample obtained as described above.

**Table 1**

| Sample No. | Sample preparation condition | | | | | | | | | Current density after 20 hours (A/cm²) | Peeling of surface-coating layer in tape removal test | Evaluation result | | Remarks |
|---|---|---|---|---|---|---|---|---|---|---|---|---|---|---|
| | Substrate | Strike layer | | | Surface-coating layer | | | Sn-containing oxide layer | | | | Corrosion resistance after 20 hours | Adhesion | |
| | | Type | Coating weight (g/m²) | P content (mass%) | Type | Average thickness (µm) | Formation method | Main component | Average thickness (nm) | | | | | |
| 1 | | N/A | - | - | | 1.0 | | - | - | 0.041 | Peeled | Pass | Fail | Comparative Example |
| 2 | | Ni | 0.02 | - | | 1.0 | | - | - | 0.045 | Not peeled | Pass | Pass | Comparative Example |
| 3 | | | 0.02 | - | | 3.0 | | - | - | 0.041 | Not peeled | Pass | Pass | Comparative Example |
| 4 | | | 0.19 | - | | 1.0 | | - | - | 0.049 | Not peeled | Pass | Pass | Comparative Example |
| 5 | | | 0.75 | - | | 1.0 | | - | - | 0.119 | Not peeled | Pass | Pass | Comparative Example |
| 6 | | | 0.75 | - | | 5.0 | | - | - | 0.068 | Not peeled | Pass | Pass | Comparative Example |
| 7 | | Ni-P | 0.001 | 12 | | 1.0 | | - | - | 0.043 | Not peeled | Pass | Pass | Comparative Example |
| 8 | | | 0.001 | 12 | Au | 3.0 | Plating | - | - | 0.040 | Not peeled | Pass | Pass | Comparative Example |
| 9 | | | 0.03 | 15 | | 0.5 | | - | - | 0.063 | Not peeled | Pass | Pass | Comparative Example |
| 10 | SUS447J1 | | 0.03 | 15 | | 1.0 | | - | - | 0.047 | Not peeled | Pass | Pass | Comparative Example |
| 11 | | | 0.42 | 15 | | 1.0 | | - | - | 0.095 | Not peeled | Pass | Pass | Comparative Example |
| 1.2 | | | 1.4 | 16 | | 1.0 | | - | - | 0.295 | Not peeled | Fail | Pass | Comparative Example |
| 13 | | | 1.5 | 16 | | 3.0 | | - | - | 0.273 | Not peeled | Fail | Pass | Comparative Example |
| 14 | | | 2.0 | 15 | | 5.0 | | - | - | 0.330 | Not peeled | Fail | Pass | Comparative Example |
| 15 | | Cu | 0.2 | - | | 1.0 | | - | - | 0.045 | Not peeled | Pass | Pass | Comparative Example |
| 16 | | Ag | 0.5 | - | | 1.0 | | - | - | 0.086 | Not peeled | Pass | Pass | Comparative Example |
| 17 | | Ni | 0.01 | - | Carbon black-dispersed epoxy resin | 10.0 | Firing after application | - | - | 0.130 | Not peeled | Pass | Pass | Comparative Example |
| 18 | | Ag | 0.005 | - | | 5.0 | | - | - | 0.165 | Not peeled | Pass | Pass | Comparative Example |
| 19 | | | 1.2 | - | | 5.0 | | - | - | 0.314 | Not peeled | Fail | Pass | Comparative Example |

| Sample No. | Sample preparation condition | | | | | | | | | Current density after 20 hour (µA/cm²) | Peeling of surface-coating layer in tape removal test | Evaluation result | | Remarks |
|---|---|---|---|---|---|---|---|---|---|---|---|---|---|---|
| | Substrate | Strike layer | | | Surface-coating layer | | | Sn-contaning oxide layer | | | | Corrosion resistance after 20 hours | Adhesion | |
| | | Type | Coating weight (g/m²) | P content (mass%) | Type | Average thickness (µm) | Formation method | Main componet | Average thickness (nm) | | | | | |
| 20 | | N/A | - | - | Graphite-dispersed phenol resin | 3.0 | Firing after application | - | - | 0.175 | Peeled | Pass | Fail | Comparative Example |
| 21 | | Ni-P | 0.007 | 12 | | 5.0 | | - | - | 0.184 | Not peeled | Pass | Pass | Comparative Example |
| 22 | | | 1.5 | 15 | | 5.0 | | - | - | 0.467 | Not peeled | Fail | Pass | Comparative Example |
| 23 | | Ni | 0.002 | - | Diamond-like carbon | 0.3 | CVD | - | - | 0.174 | Not peeled | Pass | Pass | Comparative Example |
| 24 | | | 1.3 | - | | 1.0 | | - | - | 0.391 | Not peeled | Fail | Pass | Comparative Example |
| 25 | | Ni-11 | 0.01 | 15 | Ni:Sn₂ | 1.0 | Plating | - | - | 0.022 | Not peeled | Pass | Pass | Comparative Example |
| 26 | | | 1.5 | 16 | | 3.0 | | - | - | 0.338 | Not peeled | Fail | Pass | Comparative Example |
| 27 | | Ni-P | 0.01 | 15 | TiN-dispersed Ni:Sn₂ | 2.0 | Plating | - | - | 0 080 | Not peeled | Pass | Pass | Comparative Example |
| 28 | SUS447J1 | | 1.5 | 15 | | 5.0 | | - | - | 0.395 | Not peeled | Fail | Pass | Comparative Example |
| 29 | | Ni-P | 0.01 | 15 | Ni:Sn₂ | 1.0 | Plating | SnO₂ | 15 | 0.013 | Not peeled | Pass (excellent) | Pass | Comparative Example |
| 30 | | Ni.P | 0.01 | 15 | SnO₂ | 0.1 | PVD | - | - | 0.003 | Not peeled | Pass (excellent) | Pass | Example |
| 31 | | | 1.5 | 16 | | 0.1 | | - | - | 0.275 | Not peeled | Fail | Pass | Comparative Example |
| 32 | | Au | 0.003 | - | TᵢO₂ | 0.1 | PVD | - | - | 0.004 | Not peeled | Pass (excellent) | Pass | Example |
| 33 | | Ni | 0.005 | - | TiN | 0.1 | PVD | - | - | 0.168 | Not peeled | Pass | Pass | Comparative Example |
| 34 | | | 1.5 | - | | 0.1 | | - | - | 0.429 | Not peeled | Fad | Pass | Comparative Example |
| 35 | | Ni | 0.005 | - | Polyanilme | 1.0 | Electropolymerization | - | - | 0.138 | Not peeled | Pass | Pass | Example |
| 36 | | | 1.2 | - | | 1.0 | | - | - | 0.304 | Not peeled | Fail | Pass | Comparative Example |
| 37 | Titanium JIS 1 type | Ni | 0.01 | - | Au | 1.0 | Plating | - | - | 0.037 | Not peeled | Pass | Pass | Comparative Example |
| 38 | | | 1.4 | - | | 1.0 | | - | - | 0.237 | Not peeled | Fail | Pass | Comparative Example |

The table reveals the following points.
(a) The samples of Examples all had low current density after 20 hours in the corrosion resistance evaluation, and had favorable corrosion resistance even in the event of long exposure to high potential as in the separator use environment. In particular, Nos. 29, 30, and 32 had excellent corrosion resistance. Moreover, the samples of Examples all had excellent adhesion property.
(b) The samples of Comparative Examples Nos. 1 and 20 with no strike layer did not have desired adhesion property.
(c) The samples of Comparative Examples Nos. 12 to 14, 19, 22, 24, 26, 28, 31, 34, 36, and 38 with the coating weight of the strike layer exceeding the appropriate range had high current density after 20 hours in the corrosion resistance evaluation, and did not have desired corrosion resistance.

### REFERENCE SIGNS LIST

- 1: membrane-electrode joined body
- 2, 3: gas diffusion layer
- 4, 5: separator
- 6: air passage
- 7: hydrogen passage

## Claims

1. A metal sheet for separators of polymer electrolyte fuel cells,
comprising:
a substrate made of a stainless steel sheet or a titanium sheet; and
a surface-coating layer with which a surface of the substrate is coated, with a strike layer in between,
wherein a coating weight of the strike layer is 0.001 g/m² to 1.0 g/m² and
the surface-coating layer is made of a metal oxide layer, a metal carbide layer, a conductive polymer layer, or a mixed layer thereof.

2. The metal sheet for separators of polymer electrolyte fuel cells according to claim 1,
wherein the strike layer contains at least one element selected from the group consisting of Ni, Cu, Ag, and Au.

## Patentansprüche

1. Metallblech für Separatoren von Polymerelektrolytbrennstoffzellen, umfassend:
ein Substrat aus einem Edelstahlblech oder einem Titanblech; und
eine Oberflächenüberzugsschicht, mit der eine Oberfläche des Substrats mit einer dazwischenliegenden Stoßschicht beschichtet ist,
worin ein Beschichtungsgewicht der Stoßschicht 0,001 g/m² bis 1,0 g/m² beträgt und
die Oberflächenüberzugsschicht aus einer Metalloxidschicht, einer Metallcarbidschicht, einer Schicht aus leitendem Polymer oder einer daraus gemischten Schicht ist.

2. Metallblech für Separatoren von Polymerelektrolytbrennstoffzellen gemäß Anspruch 1,
worin die Stoßschicht mindestens ein Element enthält, ausgewählt aus der Gruppe, bestehend aus Ni, Cu, Ag und Au.

## Revendications

1. Feuille de métal pour séparateurs de piles à combustible à électrolyte polymère, comprenant :
un substrat fait d'une feuille d'acier inoxydable ou d'une feuille de titane ; et
une couche de revêtement de surface avec laquelle une surface du substrat est revêtue, avec une couche d'amorce entre elles,
dans laquelle un poids de revêtement de la couche d'amorce est de 0,001 g/m² à 1,0 g/m² et
la couche de revêtement de surface est faite d'une couche d'oxyde de métal, d'une couche de carbure de métal, d'une couche de polymère conducteur, ou d'une couche mixte de celles-ci.

2. Feuille de métal pour séparateurs de piles à combustible à électrolyte polymère selon la revendication 1,
dans laquelle la couche d'amorce contient au moins un élément sélectionné à partir du groupe constitué par Ni, Cu, Ag, et Au.
